# DEMANDE DE BREVET EUROPEEN

(11) **EP 4 685 720 A1**
(43) Date de publication de la demande: **28.01.2026**
(21) Numéro de dépôt: 25190654.1
(22) Date de dépôt: 21.07.2025
(51) Int. Cl.: G06Q 20/34, H04B 5/00, H04W 4/80

(54) **PROCEDE ET DISPOSITIF DE COMMUNICATION EN CHAMP PROCHE**

(30) Priorité: 26.07.2024 EP 24315361; 01.10.2024 FR 2410563
(71) Demandeur: STMicroelectronics International N.V., 1228 Plan-les-Ouates, Geneva (CH)
(72) Inventeur: MOHAMMED BRAHIM, Arach, 06600 ANTIBES (FR); GRIMAUD, Jean-Marc, 06410 BIOT (FR)
(74) Mandataire: Cabinet Beaumont

(57) **Abrégé**

La présente description concerne un procédé de communication NFC (400) entre un premier dispositif (401) en mode carte, comprenant un contrôleur NFC (4012), et un deuxième dispositif (402) en mode lecteur (402), dans lequel ledit premier dispositif (401) sort d'un mode d'écoute à réception par ledit contrôleur NFC (4012) d'un contenu d'une séquence captée d'un champ radiofréquence.

## Description

### Domaine technique

La présente description concerne de façon générale les circuits et dispositifs électroniques, et plus particulièrement les circuits et dispositifs électroniques adaptés à mettre en oeuvre une communication sans fil. La présente description se rapporte plus particulièrement à des communications en champ proche (NFC - Near Field Communication) et à leurs mises en oeuvre.

### Technique antérieure

Il est de plus en plus courant d'utiliser des communications sans fil pour transmettre des données entre deux, ou plus de deux, dispositifs électroniques. Un type de communication sans fil concerné ici est une communication en champ proche (NFC, near field communication), ou communication NFC.

De plus en plus de transactions sont mises en oeuvre par des communications sans fil, comme des communications utilisant une technologie de communication en champ proche. Les protocoles de communication mis en oeuvre pendant de telles communications sans fil évoluent sans cesse.

Pour mettre en oeuvre une telle communication NFC, un premier dispositif électronique peut fonctionner dans un mode dit "carte" ou "émulation carte", et un deuxième peut fonctionner dans un mode dit "lecteur" ou "terminal". De tels dispositif électroniques sont, par exemple, des téléphones mobiles intelligents ou évolués (smartphone).

Il serait souhaitable de pouvoir améliorer, au moins en partie, certains aspects de la protection de communications sans fil de type NFC entre des dispositifs électroniques.

### Résumé de l'invention

Il existe un besoin pour des communications sans fil améliorées et plus rapides.

Il existe un besoin pour des communications NFC améliorées et plus rapides.

Il existe un besoin pour des dispositifs électroniques mettant en oeuvre de telles communications.

Il existe un besoin pour des systèmes comprenant au moins deux dispositifs électroniques mettant en oeuvre de telles communications.

Un mode de réalisation pallie tout ou partie des inconvénients des communications sans fil connues.

Un mode de réalisation pallie tout ou partie des inconvénients des communications NFC connues.

Un mode de réalisation prévoit un procédé de communication NFC entre un premier dispositif en mode carte, comprenant un contrôleur NFC, et un deuxième dispositif en mode lecteur, dans lequel ledit premier dispositif sort d'un mode d'écoute à réception par ledit contrôleur NFC d'un contenu d'une séquence captée d'un champ radiofréquence.

Un mode de réalisation prévoit un dispositif électronique adapté à être un premier dispositif dans un procédé de communication NFC entre ledit premier dispositif en mode carte, comprenant un contrôleur NFC, et un deuxième dispositif en mode lecteur, dans lequel ledit premier dispositif sort d'un mode d'écoute à réception par ledit contrôleur NFC un contenu d'une séquence captée d'un champ radiofréquence.

Un mode de réalisation prévoit un système électronique comprenant un premier dispositif et un deuxième dispositif électronique, le système étant adapté à mettre en oeuvre un procédé de communication NFC entre ledit premier dispositif en mode carte, comprenant un contrôleur NFC, et ledit deuxième dispositif en mode lecteur, dans lequel ledit premier dispositif sort d'un mode d'écoute à réception par ledit contrôleur NFC d'un contenu dans une séquence captée d'un champ radiofréquence.

Selon un mode de réalisation, ladite séquence fait partie d'une trame d'interrogation émise par ledit deuxième dispositif.

Selon un mode de réalisation, ledit contrôleur NFC détecte le contenu de ladite séquence par comparaison avec un ou plusieurs contenus de référence qu'il stocke en mémoire.

Selon un mode de réalisation, lesdits contenus de référence stockés en mémoire dans le contrôleur NFC lui sont envoyés par un processeur applicatif dudit premier dispositif.

Selon un mode de réalisation, ledit processeur applicatif dudit premier dispositif est adapté à déclencher ledit mode d'écoute.

Selon un mode de réalisation, à réception dudit contenu, le contrôleur NFC est adapté à signaler, audit processeur applicatif, une suspension du mode d'écoute.

Selon un mode de réalisation, ledit contenu est au début d'une première trame d'interrogation.

Selon un mode de réalisation, en fin de communication NFC, le contrôleur NFC est adapté à entrer de nouveau dans le mode d'écoute après un délai prédéfini.

Un autre mode de réalisation prévoit un produit programme d'ordinateur comprenant des instructions de code de programme enregistré sur un support utilisable dans un ordinateur, comprenant : des moyens de programmation lisibles par ordinateur pour mettre en oeuvre le procédé décrit précédemment lorsque ledit programme fonctionne sur un ordinateur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un dispositif électronique adapté à mettre en oeuvre une communication NFC selon un mode de réalisation ;
la figure 2 représente un mode de réalisation d'un système électronique adapté à mettre en oeuvre une communication NFC selon un mode de réalisation ;
la figure 3 représente un procédé usuel de mise en oeuvre d'une communication NFC ; et
la figure 4 représente un mode de mise en oeuvre d'un procédé de communication NFC.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

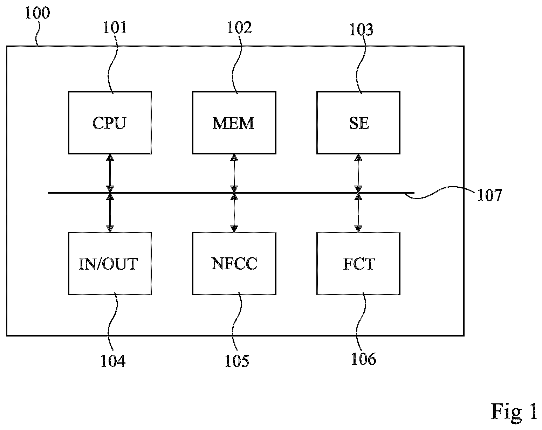

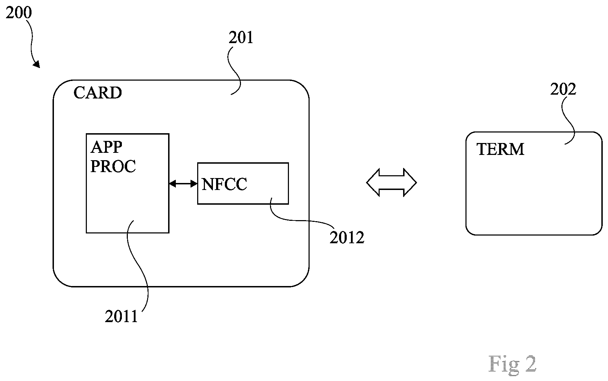

Les modes de réalisation décrits ci-après concernent la mise en oeuvre d'une communication sans fil, et plus particulièrement, la mise en oeuvre d'une communication NFC, plus rapide. La présente description s'applique plus particulièrement à des dispositifs portables mettant en oeuvre une communication NFC. On se préoccupe plus précisément du côté carte, c'est-à-dire du dispositif opérant en mode "carte" ou en mode "émulation de carte", alors qu'un autre équipement du système opère en mode "lecteur". Cet équipement opérant en mode lecteur peut être tout équipement approprié, y compris un autre téléphone opérant en mode lecteur. Parmi les dispositifs équipés d'un mode émulation carte se trouvent les téléphones mobiles intelligents ou évolués (smartphone). De tels téléphones peuvent d'ailleurs fonctionner soit en mode lecteur, soit en mode carte. De tels dispositifs sont décrits en relation avec la figure 1. Une communication NFC et un système électronique la mettant en oeuvre sont, quant à eux, décrits en relation avec la figure 2.

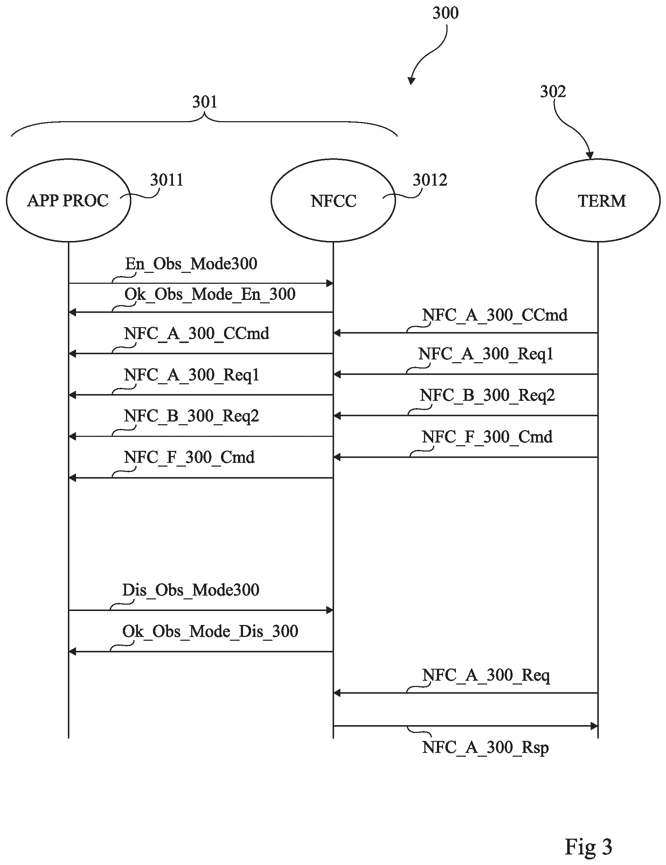

Ces modes de réalisation concernent un développement récent des protocoles de communication NFC. Dans ces développements récents, lorsqu'un dispositif portable est en mode carte (on parlera par la suite de dispositif, dispositif en mode carte, carte ou dispositif carte), il est susceptible de passer dans un mode d'écoute ou observant (Observer mode), c'est-à-dire un mode dans lequel il "écoute" son environnement afin de détecter un lecteur émettant un champ radiofréquence mais dans lequel il n'est pas adapté à répondre à des stimuli. Cependant l'utilisation d'un tel mode d'écoute peut ralentir une communication NFC. Le fonctionnement d'un tel mode est décrit plus en détails en relation avec les figures 2 et 3.

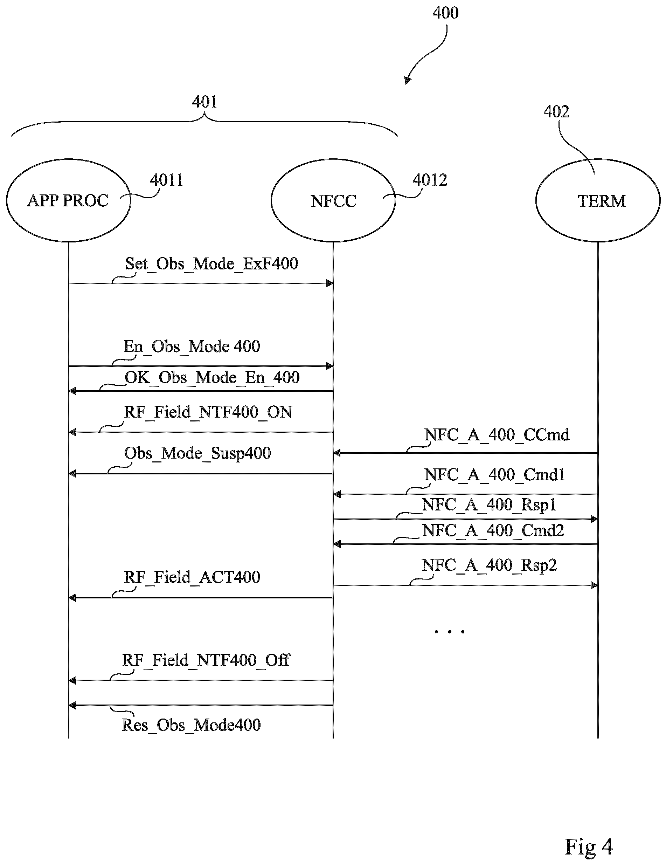

La solution apportée par les modes de réalisation consiste en la détection d'une commande particulière pour sortir automatiquement d'un mode d'écoute. En d'autres termes, la solution décrite propose de sortir du mode d'écoute lors de la détection d'un contenu spécifique dans une commande traitée reçue. Cette solution est décrite en détail en relation avec la figure 4.

Les modes de réalisation décrits ci-après sont tout particulièrement adaptés à tout dispositif électronique adapté à mettre en oeuvre une communication NFC en mode "carte", comme un téléphone portable, un téléphone portable intelligent, un dispositif électronique portable de type montre connectée ou cigarette électronique.

De plus, les modes de réalisation décrits ci-dessus sont particulièrement adaptés pour être utilisés dans tout type de marchés industriels où une communication NFC est utilisée. Plus particulièrement, une telle communication NFC peut être destinée à :
- l'industrie automobile, par exemple dans le domaine de l'électrification automobile ou dans le domaine des systèmes avancés d'aide à la conduite (Advanced Driver Assistance Systems - ADAS) ;
- l'industrie, par exemple dans le domaine de l'énergie verte, dans le domaine de l'électrification des infrastructures, de l'internet des objets (Internet of Things - IoT) et des maisons intelligentes (SmartHome), où la consommation d'électricité et d'énergie et l'échange de données sont des éléments clés ; et
- l'industrie de l'électronique personnelle, par exemple dans le domaine de la téléphonie mobile et de l'internet des objets (Internet of Things - IoT), ainsi que dans le domaine des interfaces haut débit.

La figure 1 est un schéma bloc représentant, très schématiquement, une architecture d'un exemple d'un dispositif électronique 100 adapté à mettre en oeuvre un procédé de communication NFC.

Le dispositif électronique 100 comprend un processeur 101 (CPU) adapté à mettre en oeuvre différents traitements de données stockées dans des mémoires et/ou fournies par d'autres circuits du dispositif 100. Selon un mode de réalisation, le processeur 101 est adapté à mettre en oeuvre un procédé de communication NFC. Selon un mode de réalisation particulier, le processeur 101 est adapté à mettre en oeuvre une ou plusieurs applications adaptées elles-mêmes à mettre en oeuvre des communications ou des transactions NFC, dans ce cas, le processeur 101 peut être appelé processeur applicatif.

Le dispositif électronique 100 comprend, en outre, différents types de mémoires 102 (MEM), parmi lesquelles, par exemple, une mémoire non volatile, une mémoire volatile, et/ou une mémoire morte. Chaque mémoire 102 est adaptée à stocker différents types de données.

Le dispositif électronique 100 comprend, en outre, par exemple, un élément sécurisé 103 (SE) adapté à traiter des données sensibles et/ou secrètes. L'élément sécurisé 103 peut comprendre son ou ses propres processeurs, son ou ses propres mémoires, etc. Selon un mode de réalisation, le processeur 101 est adapté à mettre en oeuvre un procédé de communication NFC. Selon un mode de réalisation particulier, l'élément sécurisé 103 peut comprendre un processeur adapté à mettre en oeuvre une ou plusieurs applications adaptées elles-mêmes à mettre en oeuvre des communications ou des transactions NFC, dans ce cas, le processeur de l'élément sécurisé 103 peut être appelé processeur applicatif.

Le dispositif électronique 100 peut comprendre, en outre, des circuits d'interface 104 (IN/OUT) adaptés à envoyer et/ou à recevoir des données provenant de l'extérieur du dispositif 100. Les circuits d'interface 104 peuvent être, en outre, adaptés à mettre en oeuvre un affichage de données, par exemple, un écran d'affichage.

Selon un mode de réalisation, le dispositif électronique comprend des circuits NFC 105 (NFCC). Les circuits 105 comprennent un contrôleur NFC adapté à échanger des données avec un ou plusieurs autres dispositifs électroniques pendant la mise en oeuvre d'une communication NFC. Selon un exemple, le contrôleur comprend des composants permettant la mise en oeuvre d'une communication NFC. Selon un mode de réalisation, le contrôleur NFC est adapté à recevoir des commandes de la part du processeur adaptés à mettre en oeuvre une ou plusieurs applications utilisant une communication NFC, comme le processeur 101 ou l'élément sécurisé 103. Les circuits NFC 105 comprennent, en outre, des circuits adaptés à générer et à capter un champ électromagnétique radiofréquence. Selon un mode de réalisation, le contrôleur NFC comprend des moyens de stockage de données.

Le dispositif électronique 100 comprend, en outre, différents circuits 106 (FCT) adaptés à réaliser différentes fonctions. A titre d'exemple, les circuits 106 peuvent comprendre des circuits de mesure, des circuits de conversion de données, etc.

Le dispositif électronique 100 comprend, en outre, un ou plusieurs bus de données 107 adaptés à transférer des données entre ses différents composants.

Selon un exemple particulier, le dispositif électronique 100 est adapté à mettre en oeuvre des programmes informatiques, et en particulier un programme informatique permettant de mettre en oeuvre un procédé de communication sans fil, par exemple un programme informatique permettant de mettre en oeuvre un procédé de communication sans fil côté terminal et/ou côté carte.

Plus précisément, le dispositif électronique 100 est adapté à mettre en oeuvre au moins un produit programme d'ordinateur comprenant des instructions de code de programme enregistré sur un support utilisable dans un ordinateur, comprenant des moyens de programmation lisibles par ordinateur pour mettre en oeuvre le procédé de communication sans fil en tant que dispositif terminal et/ou en tant que dispositif carte lorsque ledit programme fonctionne sur un ordinateur.

La figure 2 représente, très schématiquement et sous forme de blocs, un mode de réalisation d'un système 200 mettant en oeuvre une communication NFC.

Le système 200 comprend deux dispositifs 201 (CARD) et 202 (TERM). Chaque dispositif 201, 202 est du type du dispositif 100 décrit en relation avec la figure 1.

Le dispositif 201 est un dispositif de type carte, c'est-à-dire un dispositif électronique fonctionnant en mode "carte" ou "émulation de carte". Le dispositif 201 est appelé par la suite dispositif carte.

Le dispositif 202 est un dispositif de type lecteur, c'est-à-dire un dispositif électronique fonctionnant en mode "lecteur" ou "terminal". Le dispositif 202 est appelé par la suite dispositif lecteur.

Selon un mode de réalisation, le dispositif 201 comprend au moins un processeur applicatif 2011 (APP PROC) et un contrôleur NFC 2012 (NFCC). Le processeur applicatif 2011 est adapté à mettre en oeuvre une ou plusieurs applications capables d'utiliser une communication NFC, par exemple pour mettre en oeuvre une transaction (par exemple, bancaire, transport, accès, etc.). Le contrôleur NFC 2012 est adapté quant à lui à mettre en oeuvre pratiquement une communication NFC.

Même si ce n'est pas représenté en figure 2, le dispositif 202 comprend également au moins un contrôleur NFC pour mettre en oeuvre une communication NFC, et, par exemple, un processeur.

Une communication NFC utilise des signaux radiofréquence (RF) transmis, par les dispositifs mettant en oeuvre la communication, à l'aide d'antennes d'un circuit oscillant/résonnant. Lorsque le dispositif lecteur 202 émet un champ électromagnétique pour initier une communication avec le dispositif carte 201, ce champ est capté par le dispositif carte 201 dès qu'il se trouve à portée. Ce champ est détecté par le dispositif carte 201.

De manière générale, d'un point de vue protocole de communication, une communication NFC démarre par l'envoi, par le dispositif lecteur, d'une ou plusieurs trames d'interrogation (polling frame). Une fois que cette trame d'interrogation est captée par un dispositif carte, ce dispositif carte y répond et la communication NFC est entamée. La communication NFC se traduit par la suite par un échange de séquences de données formant des requêtes et des réponses. Il existe plusieurs types de trames d'interrogation, certains sont définies par des normes, parmi lesquelles les trames de type A, B ou F. Ces types de trames d'interrogation sont par exemple définis par les bytes transmis par une trame. D'autres bytes d'une trame peuvent permettre de définir la longueur des réponses autorisées.

De plus, les récents développements ont conduit à la création d'un nouveau mode de fonctionnement d'un dispositif électronique adapté à mettre en oeuvre une communication NFC. Ce mode de fonctionnement est un mode d'écoute, ou mode "Observer", pendant lequel un dispositif électronique capte des séquences de données, cherche à interpréter les différents protocoles qu'il capte et, lorsqu'il détecte une commande selon un protocole qu'il peut gérer, se configure sur ce protocole afin que le dispositif lecteur puisse initier une transaction. Lorsqu'un dispositif carte fonctionne dans un tel mode, son contrôleur NFC est adapté à recevoir, capter, ou écouter d'éventuelles trames d'interrogation émises par un dispositif lecteur dans le champ duquel il est susceptible de se trouver. La figure 3 illustre le début d'une communication NFC usuelle plus en détail, et illustre, en particulier, le fonctionnement du mode d'écoute. La figure 4 illustre, quant à elle, le début d'un mode de mise en oeuvre d'un procédé de communication NFC plus en détail, et illustre, en particulier, le fonctionnement du mode d'écoute.

La figure 3 représente, très schématiquement, un mode de mise en oeuvre d'un procédé de communication NFC 300 au sein d'un système électronique du type du système 200 décrit en relation avec la figure 2.

Plus particulièrement, la communication NFC 300 est mise en oeuvre entre un dispositif lecteur 302 du type du dispositif lecteur 202 décrit en relation avec la figure 2, et un dispositif carte 301 du type du dispositif 201 décrit en relation avec la figure 2. Le dispositif carte 301 comprend un processeur applicatif 3011 du type du processeur 2011 décrit en relation avec la figure 2 et un contrôleur NFC 3012 du type du contrôleur NFC 2012 décrit en relation avec la figure 2. En figure 3 sont représentés les échanges de données entre le dispositif lecteur 302, le processeur applicatif 3011 et le contrôleur NFC 3012.

A un état initial, aucune communication n'est démarrée entre le dispositif carte 301 et le dispositif lecteur 302. Le dispositif carte 301 est donc en attente de sollicitation pour mettre en oeuvre une communication NFC. Le dispositif carte 301 peut donc entrer dans un mode d'écoute. Plus particulièrement, le dispositif carte 301 peut mettre son contrôleur NFC dans un mode d'écoute. Pour cela, le processeur applicatif 3011 enclenche le mode d'écoute du contrôleur NFC 3012 en lui envoyant une commande, ou requête, En_Obs_Mode300. Le contrôleur NFC 3012 reçoit cette commande, entre dans le mode d'écoute, et peut, par exemple, répondre au processeur applicatif 3011 par une confirmation Ok_Obs_Mode_EN_300. Lorsqu'il est dans ce mode d'écoute, le contrôleur NFC 3012 se met à "écouter" un éventuel champ émis par le dispositif lecteur 302.

Dès que le contrôleur NFC 3012 reçoit capte un champ émis par le dispositif lecteur 302 et reçoit des commandes et des requêtes, il les transmet directement au processeur applicatif 3011 sans leur répondre, et, par exemple, sans les analyser. Lorsqu'il est dans ce mode d'écoute, le contrôleur NFC 3012 n'est pas autorisé à envoyer des données.

Dans l'exemple de la figure 3, le dispositif lecteur 302 envoie plusieurs trames d'interrogation comprenant plusieurs requêtes et commandes notées NFC-A-300-CCmd, NFC-A-300-Req1, NFC-B-300-Req2 et NFC-F-300-Cmd. Selon un exemple, si le dispositif lecteur 302 est adapté à mettre en oeuvre une communication NFC en utilisant plusieurs protocoles de communication différents, il peut envoyer des trames d'interrogations suivant les différents protocoles qu'il maitrise. Toutes ces requêtes et commandes notées NFC-A-300-CCmd, NFC-A-300-Req1, NFC-B-300-Req2 et NFC-F-300-Cmd sont reçues par le contrôleur NFC 3012 et sont donc transmises directement au processeur applicatif 3011. Le processeur applicatif 3011 procède donc à l'analyse du contenu de ces requêtes et commandes notées NFC-A-300-CCmd, NFC-A-300-Req1, NFC-B-300-Req2 et NFC-F-300-Cmd et décide si oui ou non il souhaite entrer en communication avec le dispositif lecteur 302.

Si c'est le processeur applicatif 3011 décide d'entrer en communication avec le dispositif lecteur 302, il envoie une commande, ou requête, Dis_Obs_Mode300 au contrôleur NFC pour qu'il sorte du mode d'écoute. Le contrôleur NFC 3012 reçoit cette commande, sort du mode d'écoute, et peut, par exemple, répondre au processeur applicatif 3011 par une confirmation Ok_Obs_Mode_Dis_300. Selon une variante, le contrôleur NFC 3012 peut être sorti du mode d'écoute par un processeur différent du processeur applicatif 3011.

Selon un exemple particulier, le mode d'écoute, ou observer mode, est un mode de fonctionnement du contrôleur NFC présent dans les dispositifs électroniques embarquant le système d'exploitation connu sous la dénomination "Android".

Une fois que le contrôleur NFC 3012 est dans un mode de fonctionnement normal, c'est-à-dire un mode de fonctionnement dans lequel il peut mettre en oeuvre une communication NFC, il peut répondre au dispositif terminal 302 lorsqu'il reçoit des commandes et des requêtes de sa part.

Dans l'exemple de la figure 3, le dispositif lecteur 302 envoie une requête NFC-A-300-Req et le contrôleur NFC 3012 lui répond par une réponse NFC-A-300-Rsp. Selon un exemple, le contrôleur NFC 3012 peut répondre directement, ou peut consulter le processeur applicatif 3011 pour savoir quelle réponse envoyer au dispositif lecteur 302. Selon un exemple, le processeur applicatif 3011 peut choisir, en fonction du type de protocole utilisé par le dispositif lecteur 302 et/ou en fonction du contenu de la ou des trames d'interrogation envoyées par le dispositif lecteur 302, l'application mettant en oeuvre la communication NFC et laisser cette application produire une réponse pour le dispositif lecteur 302.

Un inconvénient du procédé de communication NFC 300 est que l'utilisation du mode d'écoute fait perdre du temps à la communication NFC, et en particulier retarde l'établissement de la communication NFC. Le mode de mise en oeuvre décrit en relation avec la figure 4 vise à pallier ce problème.

La figure 4 représente, très schématiquement, un mode de mise en oeuvre d'un procédé de communication NFC 400 au sein d'un système électronique du type du système 200 décrit en relation avec la figure 2.

Plus particulièrement, la communication NFC 400 est mise en oeuvre entre un dispositif lecteur 402 du type du dispositif lecteur 202 décrit en relation avec la figure 2, et un dispositif carte 401 du type du dispositif 201 décrit en relation avec la figure 2. Le dispositif carte 401 comprend un processeur applicatif 4011 du type du processeur 2011 décrit en relation avec la figure 2 et un contrôleur NFC 4012 du type du contrôleur NFC 2012 décrit en relation avec la figure 2. En figure 4, sont représentés les échanges de données entre le dispositif lecteur 402, le processeur applicatif 4011 et le contrôleur NFC 4012.

Les modes de réalisation exposés ici permettent une sortie du dispositif carte 401 du mode d'écoute, ou mode Observer, sur la base de la reconnaissance d'un contenu dans une séquence émise par le dispositif lecteur 402 et reconnue par le contrôleur NFC 4012 du dispositif carte 401. Ainsi, le processeur applicatif 4011 n'a pas besoin d'analyser tous les protocoles.

Ainsi, une étape de préparation, ou étape d'initialisation, est dans un premier temps mis en oeuvre. Le processeur applicatif 4011 envoie au contrôleur NFC 4012 une liste de contenus de référence d'une séquence de données, d'une commande ou d'une requête, qui peuvent être reconnus comme signaux d'arrêt du mode d'écoute. Dans l'exemple de la figure 4, le processeur applicatif 4011 envoie une commande Set_Obs_Mode_ExF400 comprenant ladite liste de contenus de référence. Selon un exemple, ces contenus font partie de trames d'interrogation de protocole de communication NFC.

On appelle ici contenu d'une séquence de données, d'une commande ou d'une requête, une donnée ou un groupe de données compris dans une séquence de données, une commande ou une requête.

Selon un premier mode de réalisation, la liste de contenus de référence peut être une liste de données complètes, c'est-à-dire des chaines de bits ou d'octets, des données entières et ou des ensembles de données complètes. Selon un exemple, chaque contenu peut avoir une longueur définie et être placé à n'importe quel emplacement d'une séquence de données ou d'une trame de données. Selon un exemple, chaque contenu peut avoir une longueur non définie et être placé à n'importe quel emplacement d'une séquence de données ou d'une trame de données.

Selon un exemple particulier, la commande Set_Obs_Mode_ExF400 peut comprendre, par exemple, différentes informations parmi lesquelles :
- une liste de contenu de référence chacun caractérisé par un type, une longueur et une valeur ;
- une valeur de délais pour restaurer le mode d'écoute ; et
- une valeur d'un nombre de séquence de données suivant un contenu de référence.

Selon un deuxième mode de réalisation, la liste de contenus de référence peut être une liste de masques de données. Un masque peut être une partie de données, par exemple un préfixe d'une donnée, ou un ensemble de parties de données.

Cet étape de préparation peut être faite à tout moment de la vie du contrôleur NFC 4012, et, plus particulièrement, cette liste peut être mise à jour par ajout ou retrait de contenu à tout moment de la vie du contrôleur NFC 4012.

A un état précédant la communication NFC, le dispositif carte 401 est donc en attente de sollicitation pour mettre en oeuvre une communication NFC. Le dispositif carte 401 peut donc entrer dans un mode d'écoute. Plus particulièrement, le dispositif carte 401 peut mettre son contrôleur NFC dans un mode d'écoute. Pour cela, le processeur applicatif 4011 enclenche le mode d'écoute du contrôleur NFC 4012 en lui envoyant une commande, ou requête, En_Obs_Mode400. Le contrôleur NFC 4012 reçoit cette commande, entre dans le mode d'écoute, et peut, par exemple, répondre au processeur applicatif 4011 par une confirmation Ok_Obs_Mode_EN_400. Lorsqu'il est dans ce mode d'écoute, le contrôleur NFC 4012 est configuré pour écouter un éventuel champ émis par le dispositif lecteur 302 et pour ne pas répondre.

Le dispositif lecteur 402 génère un champ radiofréquence pour essayer d'entrer en communication avec un dispositif carte. Le contrôleur NFC 4012 capte ce champ. Selon un exemple, le contrôleur NFC 4012 peut indiquer au processeur applicatif 4011 qu'il capte un champs en lui envoyant une notification RF_Field_NTF400_ON.

Le dispositif lecteur 402 envoie une ou plusieurs trames d'interrogation correspondant à un ou plusieurs protocoles de communication différents en attendant une réponse. En figure 4, le dispositif lecteur 402 envoie au moins une trame d'interrogation dont le protocole de communication est compatible avec le dispositif carte 401. Plus particulièrement, le dispositif lecteur 402 commence par envoyer au moins une séquence de donnée NFC-A-400-CCmd dont le contenu fait partie de la liste stockée dans le contrôleur NFC 4012.

Dès réception de la séquence de donnée NFC-A-400-CCmd, le contrôleur NFC 4012 détecte le contenu, et suspend automatiquement du mode d'écoute. Selon un exemple, le contrôleur NFC 4012 peut indiquer au processeur applicatif 4011 qu'il a suspendu du mode d'écoute en envoyant une notification Obs_Mode_Susp400.

Selon un exemple particulier, la commande Obs_Mode_Susp400 peut comprendre, par exemple, différentes informations parmi lesquelles :
- une valeur indiquant le type de la commande Obs_Mode_Susp400 ;
- une valeur de longueur de la commande Obs_Mode_Susp400 ; et
- une valeur indiquant le contenu reçu qui a déclenché l'envoi de la commande Obs_Mode_Susp400.

Une fois que le contrôleur NFC 3012 a suspendu le mode d'écoute et est dans un mode de fonctionnement normal, c'est-à-dire un mode de fonctionnement dans lequel il peut mettre en oeuvre une communication NFC, il peut répondre au dispositif terminal 302 lorsqu'il reçoit des commandes et des requêtes de sa part. Selon un exemple, le dispositif lecteur 402 envoie une commande, ou requête, NFC-A-400-Cmd1 ou NFC-A-400-Cmd2, à laquelle le contrôleur NFC répond une réponse NFC-A-400-Rsp1 ou NFC-A-400-Rsp2. Le contrôleur NFC 4012 peut, en outre, indiquer au processeur applicatif 4011 qu'une communication NFC est en cours avec le dispositif lecteur 402, par exemple en envoyant une notification RF_Field_ACT400. Selon un exemple, le contrôleur NFC 4012 eut aussi envoyer au dispositif lecteur des requête d'attente de réponse quand il a besoin d'interroger le processeur applicatif 4011 avant de réponse au dispositif lecteur 402.

La suite de la communication NFC peut, par exemple, avoir lieu en incluant le processeur applicatif 4011. Celui-ci peut, par exemple, sélectionner une application et laisser cette application mettre en oeuvre la communication NFC avec le contrôleur NFC 4012.

Une fois que la communication NFC a abouti et est terminée, le dispositif lecteur 402 arrête son champ radiofréquence. Selon un exemple, le contrôleur NFC 4012 peut indiquer au processeur applicatif 4011 qu'il ne capte plus de champs en lui envoyant une notification RF_Field_NTF400_OFF. Le contrôleur NFC peut, en outre et selon un exemple, également entrer de nouveau, ou retourner, dans le mode d'écoute. Selon un exemple, le contrôleur NFC peut l'indiquer au processeur applicatif 4011 en lui envoyant une notification Res_Obs_Mode400.

Selon un exemple particulier, la commande Obs_Mode_Susp400 peut comprendre, par exemple, un champs de données vide.

Selon une variante, le contrôleur NFC 4012 peut attendre un délai prédéfini après réception d'une séquence NFC et reprendre le mode d'écoute s'il ne reçoit aucune autre séquence de la part du dispositif lecteur 402. Selon un exemple, ce délai prédéfini peut être nul.

Un avantage apporté par les modes de réalisation de la figure 4 est qu'ils permettent d'éviter d'attendre l'analyse de trames d'interrogation par le processeur applicatif pour démarrer une communication NFC, et donc de gagner du temps sur l'établissement de la communication NFC.

Un autre avantage de ces mode de réalisations est la rétrocompatibilité avec des dispositifs existants pourvu qu'il soit possible de mettre à jour leur(s) programme(s) interne(s). En effet, aucun changement n'est requis du côté des lecteurs.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Parmi les variantes envisageables, on notera :
- la possibilité de répondre à une trame dite "propriétaire" pour sortir du mode d'écoute ;
- une mise en œuvre matérielle ou matérielle et logicielle côté dispositif carte (réclamant alors une modification structurelle).

Par ailleurs, bien que l'on ait pris pour exemple, les dispositif "Android", les solutions décrites s'appliquent et se transposent à tout autre système dans lequel des problèmes similaires se posent.

Enfin, la mise en oeuvre pratique des modes de réalisation et variantes décrits est à la portée de la personne du métier à partir des indications fonctionnelles données ci-dessus.

## Revendications

1. Procédé de communication NFC (400) entre un premier dispositif (401) en mode carte, comprenant un contrôleur NFC (4012), et un deuxième dispositif (402) en mode lecteur (402), dans lequel ledit premier dispositif (401) sort d'un mode d'écoute à réception par ledit contrôleur NFC (4012) d'un contenu d'une séquence captée d'un champ radiofréquence.

2. Dispositif électronique adapté à être un premier dispositif (401) dans un procédé de communication NFC entre ledit premier dispositif (401) en mode carte, comprenant un contrôleur NFC (4012), et un deuxième dispositif (402) en mode lecteur, dans lequel ledit premier dispositif (401) sort d'un mode d'écoute à réception par ledit contrôleur NFC (4012) d'un contenu d'une séquence captée d'un champ radiofréquence.

3. Système électronique comprenant un premier dispositif (401) et un deuxième dispositif (402) électronique, le système étant adapté à mettre en oeuvre un procédé de communication NFC entre ledit premier dispositif (401) en mode carte, comprenant un contrôleur NFC (4012), et ledit deuxième dispositif (402) en mode lecteur, dans lequel ledit premier dispositif (401) sort d'un mode d'écoute à réception par ledit contrôleur NFC (4012) d'un contenu dans une séquence captée d'un champ radiofréquence.

4. Procédé selon la revendication 1, dispositif selon la revendication 2, ou système selon la revendication 3, dans lequel ladite séquence fait partie d'une trame d'interrogation émise par ledit deuxième dispositif (402).

5. Procédé selon la revendication 1 ou 4, dispositif selon la revendication 2 ou 4, ou système selon la revendication 3 ou 4, dans lequel ledit contrôleur NFC (4012) détecte le contenu de ladite séquence par comparaison avec un ou plusieurs contenus de référence qu'il stocke en mémoire.

6. Procédé selon l'une quelconque des revendications 1, 4 ou 5, dispositif selon l'une quelconque des revendications 2, 4 ou 5, ou système selon l'une quelconque des revendications 3 à 5, dans lequel lesdits contenus de référence stockés en mémoire dans le contrôleur NFC (4012) lui sont envoyés par un processeur applicatif (4011) dudit premier dispositif (401).

7. Procédé, dispositif ou système selon la revendication 6, dans lequel ledit processeur applicatif (4011) dudit premier dispositif (401) est adapté à déclencher ledit mode d'écoute.

8. Procédé, dispositif ou système selon la revendication 6 ou 7, dans lequel, à réception dudit contenu, le contrôleur NFC (4012) est adapté à signaler, audit processeur applicatif (4011), une suspension du mode d'écoute.

9. Procédé selon l'une quelconque des revendications 1, 4 à 8, dispositif selon l'une quelconque des revendications 2, 4 à 8, ou système selon l'une quelconque des revendications 3 à 8, dans lequel ledit contenu est au début d'une première trame d'interrogation.

10. Procédé selon l'une quelconque des revendications 1, 4 à 9, dispositif selon l'une quelconque des revendications 2, 4 à 9, ou système selon l'une quelconque des revendications 3 à 9, dans lequel, en fin de communication NFC, le contrôleur NFC (4012) est adapté à entrer de nouveau dans le mode d'écoute après un délai prédéfini.
